# EUROPÄISCHE PATENTSCHRIFT

(11) **EP 3 220 740 B1**
(45) Veröffentlichungstag und Bekanntmachung des Hinweises auf die Patenterteilung: **18.03.2026**
(21) Anmeldenummer: 15808077.0
(22) Anmeldetag: 20.11.2015
(51) Int. Cl.: A01P 1/00, A01N 59/16, A01N 59/20, A01N 25/10, A01N 43/80, A01N 43/78

(54) **ANTIMIKROBIELLES MITTEL ZUM BIOCIDEN AUSRÜSTEN VON POLYMEREN**
ANTIMICROBIAL AGENT FOR THE BIOCIDAL FINISH OF POLYMERS
AGENT ANTIMICROBIEN POUR L'APPRÊT BIOCIDE DE POLYMÈRES

(30) Priorität: 20.11.2014 AT 508442014
(43) Veröffentlichungstag der Anmeldung: 27.09.2017
(73) Patentinhaber: Wenatex Forschung - Entwicklung - Produktion GmbH, 5282 Braunau am Inn - Ranshofen (AT)
(72) Erfinder: RAMETSTEINER, Karl, A-4040 Linz (AT)
(74) Vertreter: Hübscher & Partner Patentanwälte GmbH
(86) Internationale Anmeldenummer: PCT/AT2015/050296
(87) Internationale Veröffentlichungsnummer: WO 2016/077857

(56) Entgegenhaltungen:
- WO-A1-00/33656
- WO-A1-00/43395
- WO-A1-2004/108841
- WO-A1-2012/064894
- WO-A1-92/01380
- DE-A1- 2 812 261
- US-A1- 2008 066 645
- US-A1- 2008 124 368
- SPESIA M B ET AL: "Mechanistic insight of the photodynamic inactivation of Escherichia coli by a tetracationic zinc(II) phthalocyanine derivative", PHOTODIAGNOSIS AND PHOTODYNAMIC THERAPY, ELSEVIER, AMSTERDAM, NL, vol. 6, no. 1, 1 March 2009 (2009-03-01), pages 52 - 61, XP026116241, ISSN: 1572-1000, [retrieved on 20090207], DOI: 10.1016/J.PDPDT.2009.01.003
- A. MINNOCK ET AL: "Mechanism of Uptake of a Cationic Water-Soluble Pyridinium Zinc Phthalocyanine across the Outer Membrane of Escherichia coli", ANTIMICROBIAL AGENTS AND CHEMOTHERAPY, vol. 44, no. 3, 1 March 2000 (2000-03-01), US, pages 522 - 527, XP055250119, ISSN: 0066-4804, DOI: 10.1128/AAC.44.3.522-527.2000

## Beschreibung

Die Erfindung bezieht sich auf ein antimikrobielles Mittel zum biociden Ausrüsten eines Schaumstoffs auf der Basis von Biociden, deren Moleküle wenigstens ein Stickstoffatom mit einem freien Elektronenpaar aufweisen.

Beim biociden Ausrüsten von Polymeren, insbesondere von Polyurethanschaumstoffen oder von in der Textilindustrie eingesetzten Polymerfasern auf der Basis von Polyethylenterephthalat (PET), Polyacrylnitril (PAN), Polypropylen (PP) und dgl., wird angestrebt, einerseits in den Stoffwechsel der Mikroorganismen einzugreifen und anderseits den Mikroorganismen die Nahrungsgrundlage zu entziehen. Die hierfür wirksamsten Biocide weisen eine relative Molekülmasse deutlich unter 1000 auf, was im Allgemeinen die Flüchtigkeit, Löslichkeit und Migrationsfreudigkeit dieser Wirkstoffe unterstützt. Um eine Umweltbelastung durch solche Biocide zu vermeiden, ist es bekannt (EP 2 420 521 A1, EP 2 505 059 A1), die Molekülmasse durch eine Polymerisation der Wirkstoffe oder eine Anbindung an Polymere zu erhöhen und eine kovalente Bindung der Wirkstoffe an die Polymermatrix anzustreben. So kann beispielsweise eine Reihe von Biociden mit wirksamen primären und sekundären Aminen oder mit reaktiven Hydroxylgruppen im Molekül erfolgreich in eine Polyurethan- oder Epoxidharzmatrix eingebunden werden. Die wirksamsten Biocide enthalten jedoch oftmals nur tertiär gebundenen Stickstoff, keine (ausreichend reaktiven) Hydroxlgruppen oder aber sekundäre Aminogruppen, die so reaktionsträge sind, dass sie erst nachrangig mit den Polyadditionspartnern reagieren, sodass die Polyaddition Vorrang gegenüber der kovalenten Bindung hat.

Darüber hinaus verlieren häufig die wirksamsten Basismoleküle in kovalent gebundener Form ihre ausgezeichnete Wirkung, weil sie zur Entfaltung dieser biologischen Wirkung eine gewisse Beweglichkeit (Löslichkeit) behalten müssen.

Zur biociden Ausrüstung von Polymeren, insbesondere Latex oder Polyurethan, wurde bereits ein antimikrobielles Mittel vorgeschlagen (WO 2012/064894 A1), das einen Metallphthalocyaninkomplex mit einem freien Metallion umfasst. Allerdings sind keine Biozide enthalten, die das Metallion binden könnten.

Darüber hinaus ist es bekannt (WO 2004/108841 A1), zur biociden Ausrüstung von wässrigen, schwermetallhaltigen Farbmittelpräparationen und Tinten als Biocid eine Mischung aus 5-Chloro-2-methyl-4-isothiazolin-3-on, 2-Methyl-4-isothiazolin-3-on und 2-Bromo-2-nitropropan-1, 3-diol zu verwenden, um ein Ausfällen der Schwermetalle zu verhindern. Als komplex gebundene Schwermetalle kommen insbesondere Kupfer, Kobalt, Nickel, Eisen, Chrom und Aluminium in Betracht.

Um eine Schimmelbildung bei Tinten mit Kupferphthalocyaninpigmenten als Farbstoff zu verhindern, ist es außerdem bekannt (US 2008/066645 A1), der Tinte eine Thiazolverbindung als Schimmelschutzmittel zuzusetzen, was jedoch die Niederschlagsneigung solcher Tinten verstärkt. Um die Bildung von Niederschlägen zu verhindern, wird vorgeschlagen, Tinten, die ein Kupferphthalocyaninpigment als Farbstoff zusammen mit einer Thiazolverbindung zu verwenden, eine metallische Phthalocyaninverbindung mit einem oder mehreren Gegenionen, nämlich Ammoniumionen und/oder organische Ammoniumionen, hinzuzufügen. Die zu koordinierenden Metalle umfassen insbesondere Aluminium, Kupfer, Nickel, Eisen und Kobalt.

Der Erfindung liegt somit die Aufgabe zugrunde ein antimikrobielles Mittel anzugeben, das trotz einer guten Löslichkeit seiner Biocidmoleküle in Wasser eine Umweltbelastung durch die Biocidmoleküle auch in einer Langzeitwirkung weitgehend ausschließt, ohne Einschränkungen hinsichtlich der biociden Wirkung in Kauf nehmen zu müssen.

Die Erfindung löst die gestellte Aufgabe einerseits durch die Merkmale des Anspruchs 1 und anderseits durch die Merkmale des Anspruchs 2.

Es hat sich in überraschender Weise gezeigt, dass antimikrobielle Mittel, bei denen das Biocid koordinativ an einen Metallkomplex gebunden ist, in der Regel nicht wasserlöslich sind, aber die antimikrobielle Wirkung des Biocids behalten, obwohl die Biocidmoleküle als nicht flüchtig anzusehen sind. Dies wird auf die Koordinationsbindung zurückgeführt, die eine ausreichende Beweglichkeit der an den Metallkomplex dauerhaft gebundenen Biocidmoleküle zulässt, um eine Interaktion mit der Oberfläche der zu bekämpfenden Mikroorganismen zu wahren.

Als in diesem Zusammenhang vorteilhafte Biocide haben sich Imidazole, Benzimidazole, Oxazole, Isoxazole, Oxadiazole, Biguanide, Thiazole, Isothiazole und Pyrimidine erwiesen, welche Biocide über das freie Elektronenpaar des Stickstoffatoms an einen Metallkomplex koordinativ gebunden ist, der ein Phthalocyanin mit Kupfer als Zentralatom ist, wenn das Phthalocyanin mit einem Polyaminopropylbiguanid, einem Polyhexamethylenbiguanid oder einem Polyoxyalkylenbiguanid koordinativ gebunden ist.

Es kann aber auch ein Biocid aus der Gruppe der Imidazole, Benzimidazole, Oxazole, Isoxazole, Oxadiazole, Biguanide, Thiazole, Isothiazole oder Pyrimidine über das freie Elektronenpaar des Stickstoffatoms an einen Metallkomplex koordinativ gebunden sein, der ein Porphyrin mit Kupfer als Zentralatom ist, wobei das Porphyrin mit einem Imidazol oder einem Benzimidazol koordinativ gebunden ist.

Aufgrund der unterschiedlichen Koordinationszahlen 2, 4 und 6 der Zentralatome können je nach Art der metallischen Zentralatome der Metallkomplexe mehrere stickstoffhaltige Biocidmoleküle oder Biocidmoleküle mehrfach angedockt werden, sodass sich hinsichtlich der Menge und Stabilität unterschiedliche Bindungsmöglichkeiten ergeben.

Beim Einsatz eines Phthalocyanins mit Kupfer als Zentralatom kann die aufgrund der Koordinationszahl 4 des Kupfers mögliche planare Anordnung der Liganden vorteilhaft genützt werden auch größere Biocidmoleküle mit einer ausreichenden Beweglichkeit koordinativ zu binden. Hierfür eignen sich insbesondere Biguanide, wobei das Kupferatom an je ein Stickstoffatom zweier Biguanidmoleküle gebunden werden kann, zur Nutzung besonders stabiler Verhältnisse in der Regel aber nur ein Biguanidmolekül koordinativ an das zentrale Kupferatom gebunden wird.

Als Biguanid eignen sich vorteilhaft ein Polyaminopropylbiguanid (relative Molekülmasse Mᵣ = 800 - 10000) mit der Strukturformel 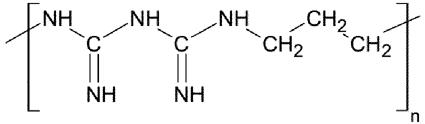
wobei gilt: n = 5 - 50,
ein Polyhexamethylenbiguanid (Mᵣ = 800 - 10000) mit der Strukturformel 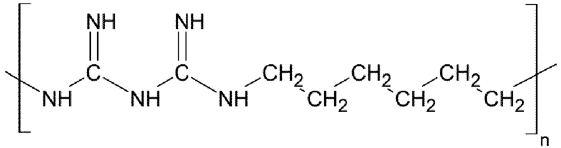
wobei gilt: n = 5 - 50
und ein Polyoxyalkylenbiguanid (Mᵣ = 1000 - 15000) mit der Strukturformel 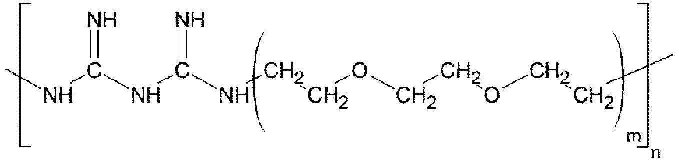
wobei gilt: m = 2 - 10 und n = 5 - 50.

Porphyrine, wie Chlorophylle, mit Kupfer als Zentralatom zeigen aus sterischen Gründen eine ausgeprägte Affinität zu Imidazolen und Benzimidazolen.

Beispielhaft kann in diesem Zusammenhang ein Imidazol mit der Strukturformel 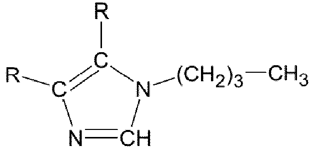
wobei gilt: R = Wasserstoff, ein Alkyl oder ein Halogen,
oder ein Benzimidazol der Strukturformel 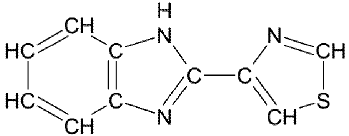
angegeben werden.

Die nachfolgende Beispiele sollen die Erfindung erläutern, die biocide Wirkung und deren Stabilität gegenüber einer Migration und einer Auswaschung zeigen, den Erfindungsgegenstand jedoch nicht einengen.

### Beispiel 1:

Phthalocyanin mit Kupfer als Zentralatom (CuPhthC ) kommt in insgesamt 11 stereospezifischen Konfigurationen vor, von denen die α-, β- und ε-Varianten technisch genutzt werden. Rein optisch unterscheiden sie sich durch unterschiedliche Blautöne:
- α: rotstichiges Blau, thermisch wenig stabil
- β: grünstichiges Blau, thermisch hochstabil
- ε: stark rotstichiges Blau, chemisch instabiler, also reaktionsfreudiger als α und β, sodass erfindungsgemäß nur die ε-Variante eingesetzt wird.

57,6 g (0,1 mol) CuPhthC werden in 200 ml Dimethylformamid (DMF) suspendiert und in der Wärme (60 °C) mit 1300 g (0,1 mol) Polyhexamethylenbiguanid (Polyhexanid), relative Molekülmasse Mᵣ = 1298, gelöst in 1800 ml H₂O, versetzt und 2 Stunden gerührt. Die Farbe verliert sehr rasch den rotstichigen Anteil, die Suspension wird deutlich viskoser.

Nach einer Filtration und einer Trocknung des erhaltenen Produktes ergaben sich 1216 g der Koordinationsverbindung 1 mol CuPhthC + 1 mol Polyhexanid als azurblauer Farbstoff.

### Beispiel 2:

73 g (0,1 mol) eines im Handel als E141 - natural green (= Lebensmittelfarbstoff) erhältlichen kupferhältigen Chlorophyllins (CuChloroph) wurden in 250 ml Wasser teils gelöst, teils suspendiert und mit 20,3 g (0,1 mol) 2-(4-Thiazolyl)benzimidazol ("Thiobendazol") versetzt und die grüne Suspension 30 Minuten bei Raumtemperatur gerührt. Der Farbton wurde deutlich intensiver und gelbstichiger. Nach einer Isolation wurden 85,4 g der Koordinationsverbindung 1 mol CuChloroph + 1 mol Thiobendazol als grüngelber Farbstoff erhalten.

Die nachfolgenden Beispiele sollen die biocide Wirkung bei der Einarbeitung in einen Polyurethanschaumstoff zeigen.

### Beispiel 3:

95 g eines trifunktionellen Polypropylenglykols (OH Zahl: 46), 3,4 g H₂O, 2,0 g Silikonstabilisator auf der Basis eines Polysiloxanpolyethylenglycol-Copolymers und 1,5 g 1,4-Diazabicyclo[2.2.2]octan (DABCO) als Schaumkatalysator, gelöst in 3 g Tripropylenglykol, werden mit 65 g Diphenylmethan-Diisocyanat (MDI) mit einem NCO Gehalt von 29,5 % entsprechend NCO-Index 103 % intensiv vermischt und innerhalb von etwa 60 Sekunden zu einem elastischen Schaumstoff mit einem Raumgewicht RG = 45 kg/m³ aufgeschäumt. Ein Teil dieses Schaumstoffes dient als Vergleichsmuster (Nullmuster).

### Beispiel 4:

Analog Beispiel 3, jedoch mit einem auf das Gesamtgewicht von 170 g bezogenen 5 %-gen Zusatz (= 0,85 g) Polyhexanid, Mᵣ = 1300. Der erhaltene Schaumstoff hatte ein Raumgewicht RG = 46 kg/m³.

### Beispiel 5:

Analog Beispiel 3, jedoch mit einem auf das Gesamtgewicht bezogenen Zusatz von 0,3 % = 0,50 g Thiabendazol. Der erhaltene Schaumstoff hatte ein Raumgewicht RG = 45 kg/m³.

### Beispiel 6:

Wie Beispiel 3, jedoch mit einem Zusatz von 0,45 % eines CuPhtC/Polyhexanid-Komplexes (entsprechend 0,5 % Polyhexanid) aus Beispiel 1.

### Beispiel 7:

Analog Beispiel 3, jedoch mit einem Zusatz von 1,8 % eines Koordinationskomplexes aus Beispiel 2 (entsprechend 0,4 % Thiabendazol).

### Beispiel 8:

105 g des Polyolgemisches lt. Beispiel 3 werden mit 0,05 g ε-Kupferphthalocyanin und 0,6 g Polyhexanidchlorwasserstoff intensiv vermischt und nach einer Wartezeit von 15 Minuten mit 65 g Methylendiphenyldiisocyanat (MDI) analog Beispiel 3 vermischt und geschäumt. Der erhaltene Schaumstoff hatte ein Raumgewicht RG = 46 kg/m³.

### Beispiel 9:

95 g eines Polyolgemisches nach Beispiel 3 werden mit 5,03 g eines feindispersen Gemisches von 0,03 g Cu-Phthalocyanin in 5,0 g des trifunktionellen Basis-Polypropylenglykols (OH Zahl: 46) und 5,3 g eines feindispersen Gemisches von 0,3 g Zinkpyrithion in 5,0 g des gleichen Polypropylenglykols homogen vermischt und mit 62,0 g Toluoldiisocyanat auf bekannte Weise verschäumt. Es entsteht ein feinporiger, offenzelliger Schaumstoff mit einem Raumgewicht von 42 kg/m³ mit biociden Eigenschaften entsprechend dem Beispiel 8, wobei selbst nach dreißig Waschgängen mit Wasser von 30 °C die biociden Eigenschaften voll erhalten blieben. Bei einer analogen Vergleichsschäumung ohne Cu-Phthalocyanin schrumpfte die biocide Wirkung nach bereits 6 Waschgängen auf null.

### Test der biociden Wirkung

Aus den Schaumstoffen gemäß den Beispielen 3 bis 8 wurden unter sonst übereinstimmenden Bedingungen Proben hergestellt und die antimikrobielle Aktivität gemäß dem japanischen Industriestandard JIS Z 2801:2000 durch Bestimmung des Reduktionsfaktors IR für Escherichia coli (grampositiv) und Staphylococcus aureus (gramnegativ) nach einer Wochenfrist bestimmt. Die Ergebnisse sind in der nachstehenden Tabelle zusammengefasst. Dabei werden die Werte der Originalprobe jenen der Proben nach dreimaligem Auswaschen in Wasser mit einer Temperatur von 60 °C gegenübergestellt (nicht eluiert/eluiert).

| Probe Nr. | IR Escherichia coli | | IR Staphylococcus aureus | |
|---|---|---|---|---|
| | nicht eluiert | eluiert | nicht eluiert | eluiert |
| 3 | 0,3 | -0,2 | 0,2 | o,1 |
| 4 | 3,8 | 2,2 | 3,6 | 1,8 |
| 5 | 3,2 | 2,3 | 2,9 | 1,9 |
| 6 | 4,4 | 4,3 | 4,7 | 4,5 |
| 7 | 4,0 | 3,4 | 3,9 | 3,2 |
| 8 | 4,8 | 4,8 | 5,0 | 4,8 |

Die geringe biocide Wirkung der Nullprobe (Nr. 3) wird auf den Gehalt der als Katalysator verwendeten tert. Amine vor der Eluation zurückgeführt.

Der Vergleich des Reduktionsfaktors IR der erfindungsgemäßen Proben Nr. 6 bis 8 mit dem der Vergleichsproben nach dem Stand der Technik zeigt einerseits die hervorragende biocide Wirkung und anderseits die gute Stabilität und Unlöslichkeit der Koordinatverbindungen, die zum Teil wohl auch auf die chemische Einbindung in die Polyurethanmatrix zurückgeführt werden muss.

Bei der Verwendung in Thermoplasten kann naturgemäß die in situ Synthese (lt. Beispiel 8) wegen der Abwesenheit eines temporären Solvens nicht angewendet werden. In diesem Fall sind isolierte Koordinationsverbindungen (gemäß den Beispielen 1 und 2) einsetzbar, wobei vorab die thermische Stabilität (Verarbeitungstemperatur in der Regel > 150 - 250 °C) zu überprüfen ist. Demgegenüber liegt die Verarbeitungstemperatur bei den erwähnten Polyadditionskunststoffen bei moderaten 25 - 80 °C.

## Patentansprüche

1. Antimikrobielles Mittel zum biociden Ausrüsten eines Polyurethan-Schaumstoffs auf der Basis von Biociden, deren Moleküle wenigstens ein Stickstoffatom mit einem freien Elektronenpaar aufweisen, **dadurch gekennzeichnet, dass** das Biocid über das freie Elektronenpaar des Stickstoffatoms an einen Metallkomplex koordinativ gebunden ist, dass das Biocid aus der Gruppe der Imidazole, Benzimidazole, Oxazole, Isoxazole, Oxadiazole, Biguanide, Thiazole, Isothiazole oder Pyrimidine ist, dass der Metallkomplex ein Phthalocyanin mit Kupfer als Zentralatom ist und dass das Phthalocyanin mit einem Polyaminopropylbiguanid, einem Polyhexamethylenbiguanid oder einem Polyoxyalkylenbiguanid koordinativ gebunden ist.

2. Antimikrobielles Mittel zum biociden Ausrüsten eines Polyurethan-Schaumstoffs auf der Basis von Biociden, deren Moleküle wenigstens ein Stickstoffatom mit einem freien Elektronenpaar aufweisen, **dadurch gekennzeichnet, dass** das Biocid über das freie Elektronenpaar des Stickstoffatoms an einen Metallkomplex koordinativ gebunden ist, **dadurch gekennzeichnet, dass** das Biocid aus der Gruppe der Imidazole, Benzimidazole, Oxazole, Isoxazole, Oxadiazole, Biguanide, Thiazole, Isothiazole oder Pyrimidine ist, dass der Metallkomplex ein Porphyrin mit Kupfer als Zentralatom ist und dass das Porphyrin mit einem Imidazol oder einem Benzimidazol koordinativ gebunden ist.

## Claims

1. Antimicrobial agent for biocidal treatment of a polyurethane foam based on biocides whose molecules have at least one nitrogen atom with a free electron pair, **characterised in that** the biocide is coordinatively bound to a metal complex via the free electron pair of the nitrogen atom, **in that** the biocide is selected from the group consisting of imidazoles, benzimidazoles, oxazoles, isoxazoles, oxadiazoles, biguanides, thiazoles, isothiazoles or pyrimidines, that the metal complex is a phthalocyanine with copper as the central atom, and that the phthalocyanine is coordinatively bound to a polyaminopropyl biguanide, a polyhexamethylene biguanide or a polyoxyalkylene biguanide.

2. Antimicrobial agent for biocidal treatment of a polyurethane foam based on biocides whose molecules have at least one nitrogen atom with a free electron pair, **characterised in that** the biocide is coordinatively bound to a metal complex via the free electron pair of the nitrogen atom, **characterised in that** the biocide is selected from the group of imidazoles, benzimidazoles, oxazoles, isoxazoles, oxadiazoles, biguanides, thiazoles, isothiazoles or pyrimidines, that the metal complex is a porphyrin with copper as the central atom and that the porphyrin is coordinatively bound to an imidazole or a benzimidazole.

## Revendications

1. Agent antimicrobien pour le traitement biocide d'une mousse de polyuréthane à base de biocides dont les molécules comportent au moins un atome d'azote avec une paire d'électrons libres, **caractérisé en ce que** le biocide est lié par coordination à un complexe métallique via la paire d'électrons libres de l'atome d'azote, **en ce que** le biocide est choisi parmi le groupe des imidazoles, benzimidazoles, oxazoles, isoxazoles, oxadiazoles, biguanides, thiazoles, isothiazoles ou pyrimidines, **en ce que** le complexe métallique est une phtalocyanine avec le cuivre comme atome central et **en ce que** la phtalocyanine est liée par coordination à un polyaminopropyl biguanide, un polyhexaméthylène biguanide ou un polyoxyalkylène biguanide.

2. Agent antimicrobien pour le traitement biocide d'une mousse de polyuréthane à base de biocides dont les molécules comportent au moins un atome d'azote avec une paire d'électrons libres, **caractérisé en ce que** le biocide est lié par coordination à un complexe métallique via la paire d'électrons libres de l'atome d'azote, **caractérisé en ce que** le biocide est choisi parmi le groupe des imidazoles, benzimidazoles, oxazoles, isoxazoles, oxadiazoles, biguanides, thiazoles, isothiazoles ou pyrimidines, **en ce que** le complexe métallique est une porphyrine avec le cuivre comme atome central et **en ce que** la porphyrine est liée par coordination à un imidazole ou à un benzimidazole.
